(19) Europäisches Patentamt
European Patent Office
Office européen des brevets

(11) **EP 0 906 199 B1**

(12) **EUROPÄISCHE PATENTSCHRIFT**

(45) Veröffentlichungstag und Bekanntmachung des Hinweises auf die Patenterteilung:
**30.05.2001 Patentblatt 2001/22**

(21) Anmeldenummer: **98909309.1**

(22) Anmeldetag: **31.01.1998**

(51) Int Cl.[7]: **B60K 41/02**, F16D 48/08
// F16D105/02, F16D105/00,
F16D109/02, F16D109/04,
F16D109/06, F16D109/08,
B60K41/28, B60K41/24

(86) Internationale Anmeldenummer:
**PCT/DE98/00280**

(87) Internationale Veröffentlichungsnummer:
**WO 98/43846 (08.10.1998 Gazette 1998/40)**

(54) **ADAPTIVES-STEUERUNGSVERFAHREN EINES KUPPLUNGSSYSTEMS**

ADAPTIVE CONTROL METHOD OF A CLUTCH SYSTEM

PROCEDE DE COMMANDE ADAPTATIF D'UN SYSTEME D'EMBRAYAGE

(84) Benannte Vertragsstaaten:
**DE ES FR IT**

(30) Priorität: **27.03.1997 DE 19712871**

(43) Veröffentlichungstag der Anmeldung:
**07.04.1999 Patentblatt 1999/14**

(73) Patentinhaber: **ROBERT BOSCH GMBH**
**70442 Stuttgart (DE)**

(72) Erfinder: **BOLZ, Martin-Peter**
**D-71720 Oberstenfeld (DE)**

(56) Entgegenhaltungen:
EP-A- 0 385 629    EP-A- 0 494 608
EP-A- 0 635 391    EP-A- 0 698 517
EP-A- 0 709 246    DE-A- 3 926 236
DE-A- 4 011 850    DE-A- 19 509 139
DE-A- 19 540 921

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Stand der Technik

Das erfindungsgemäße System geht aus von einer Servokupplung mit den Merkmalen des Oberbegriffs des Anspruchs 1.

Solche automatische Kupplungen bzw. Servokupplungen sind beispielsweise bekannt aus "Kraftfahrtechnisches Taschenbuch, Auflage, 1991, Seiten 538 und 539. Servokupplungen bieten in Verbindung mit elektronischen Steuergeräten entweder einen automatisierten Anfahrvorgang oder, zusammen mit servobetätigten Schaltgetrieben, ein vollautomatisches Getriebe. Bei solchen Servokupplungen wird das Öffnen und Schließen der Kupplung im allgemeinen durch einen Servoantrieb getätigt. Die Ansteuerung dieses Servoantriebs sollte dabei ein gewünschtes Kupplungsmoment realisieren. Hierzu muß aber der Zusammenhang zwischen der Verstellung des Servomotors und dem von der Kupplung zu übertragenden Kupplungsmoment bekannt sein. Bei solchen Fahrzeugen mit elektronischem Kupplungsmanagement muß also ständig die gesamte Kennlinie, die den Zusammenhang zwischen der Kupplungsposition und dem übertragbaren Moment der Kupplung beschreibt, adaptiert werden. Dies wird, wie beispielsweise in der DE Anmeldung 19540921.3 beschrieben, in den Bereichen mittlerer bis hin zu starken Momenten dadurch gut erledigt, daß im normalen Fahrbetrieb die Kupplung langsam so weit geöffnet wird, bis sich zwischen der Kupplungseingangsdrehzahl und der Kupplungsausgangsdrehzahl eine meßbare Drehzahldifferenz ergibt. Das bei Auftreten der Drehzahldifferenz vom Motor gemeldete Motorausgangsmoment ist das zu dieser Position der Kupplung gehörende übertragbare Kupplungsmoment.

Mit solchen Verfahren läßt sich die Kupplungskennlinie in weiten Bereichen gut adaptieren. Schwierig anzuwenden ist dieses Verfahren aber bei sehr geringen Momenten. Die Kupplungskennlinie ist bei niedrigen Momenten sehr flach, und die Momentenangaben des Motors sind recht ungenau. Der Punkt, an dem die Kupplung anfängt ein Moment zu übertragen (auch als Druckpunkt bezeichnet), ist sowohl für das Anfahren als auch für Schaltvorgänge im Getriebe, die bei teilweise geschlossener Kupplung ablaufen sollen, von großem Interesse. Wenn die Kupplung zur Unterstützung der Synchronisation der Gänge mit benutzt werden soll, ist die genaue Kenntnis der Kupplungskennlinie im niedrigen Momentenbereich von großem Nutzen.

Aus der DE,A1,40 11 850, die den Oberbegriff des Anspruchs 1 offenbart, ist zur Adaption der Kupplung bekannt, bei Fahrzeugstillstand und eingelegtem Getriebegang die Kupplung etwas zu schließen, bis sich das Moment oder die Drehzahl des Motors ändert. Weiterhin wird vorgeschlagen, bei Fahrzeugstillstand und nicht eingelegtem Getriebegang die Kupplung etwas zu schließen bis es zu einer bestimmten Änderung der Motordrehzahl kommt.

Die Aufgabe der vorliegenden Erfindung besteht in der genauen und einfachen Adaption eines Servokupplungssystems.

Diese Aufgabe wird durch die kennzeichnenden Merkmale des Anspruchs 1 gelöst.

Vorteile der Erfindung

Wie erwähnt, geht die Erfindung aus von einem System zur Steuerung einer im Antriebsstrang eines Kraftfahrzeug angeordneten Servokupplung. In dem Antriebsstrang sind weiterhin ein Fahrzeugmotor mit einer einstellbaren Ausgangsleistung und ein Getriebe mit wenigstens einer einlegbaren Gangstufe angeordnet. Bei der Servokupplung geschieht das Öffnen und Schließen der Kupplung mittels eines Ein- und Ausrückens eines von einer Steuereinheit gesteuerten Stellgliedes. Die Ausgangsleistung des Fahrzeugmotor wird durch Betriebsparameter des Fahrzeugmotors eingestellt. Bei Vorliegen vorgebbarer Betriebsbedingungen, bei denen das Fahrzeug im wesentlichen die Fahrzeuggeschwindigkeit Null (Stillstand) aufweist, wird eine vorgegebene Gangstufe (keine Neutralstellung) eingelegt. Zur Adaption der Servokupplung wird dann eine willkürliche Ansteuerung des Stellgliedes getätigt.

Der Kern der Erfindung besteht darin, daß bei Vorliegen der vorgebbaren Betriebsbedingungen die Betriebsparameter des Fahrzeugmotors derart eingestellt werden, daß die Ausgangsleistung des Fahrzeugmotors im wesentlichen konstant ist.

Wie im folgenden Ausführungsbeispiel noch genauer beschrieben wird, basiert die Erfindung darauf, daß bei bestimmten Betriebsbedingungen des Fahrzeugmotors und konstantgehaltener Motorausgangsleistung das Kupplungsmoment relativ einfach zu bestimmen ist. Mit der erfindungsgemäßen Vorgehensweise lassen sich die Kupplungsmomente im unteren Momentenbereich mit großer Genauigkeit bestimmen. Damit liegen in diesem Bereich gute Adaptionswerte für die Kupplungskennlinie vor, die für alle Aufgaben einer automatisierten Kupplung genutzt werden können und den Komfort eines elektronischen Kupplungsmanagement verbessern.

Darüber hinaus kann als Fahrzeugmotor insbesondere eine Brennkraftmaschine vorgesehen sein. Als Betriebsparameter der Brennkraftmaschine kann dann der Drosselklappenöffnungswinkel, die Zündungseinstellung, die dem Fahrzeugmotor zugeführte Kraftstoffmenge und/oder die Regelung der Kraftstoff/Luft-Gemischzusammensetzung ($\lambda$-Regelung) eingestellt werden. Hierbei ist insbesondere vorgesehen ist, daß bei Vorliegen der vorgebbaren Betriebsbedingungen die Betriebsparameter des Fahrzeugmotors im wesentlichen konstant gehalten werden. Damit wird eine wesentliche Voraussetzung für eine konstante Ausgangsleistung des Motors erfüllt.

Liegt die vorgebbare Betriebsbedingung vor, so kann das von der Steuereinheit gesteuerte Stellglied derart beaufschlagt werden, daß die Servokupplung in vorgebbarer Weise ausgerückt bzw. geschlossen wird. Hierbei ist insbesondere vorgesehen, daß das Ausrücken stetig mit einer vorgegebener Geschwindigkeit getätigt wird oder bei vorgebbaren Werten unterbrochen wird.

In einer besonders bevorzugten Ausführungsform wird während des Ausrückens und/oder nach dem Ausrücken der Servokupplung die momentane Drehzahl des Fahrzeugmotors erfaßt und abhängig von der erfaßten Drehzahl das momentan von der Servokupplung übertragene Kupplungsmoment bestimmt.

Um störende Verlustleistungen durch Nebenaggregate (z.B. Lenksystem, Klimaanlage und/oder Stromgenerator) auszuschließen, werden während des Ausrückens der Servokupplung die Nebenaggregate derart angesteuert werden, daß die Nebenaggregate von dem Fahrzeugmotor durch ein definiertes Moment angetrieben werden. Hierbei ist insbesondere eine Abschaltung wenigstens einzelner Nebenaggregate vorgesehen.

Das erfindungsgemäß bestimmte Kupplungsmoment wird zur Adaption der Servokupplung herangezogen.

Insbesondere ist vorgesehen, daß die willkürliche Ansteuerung des Stellgliedes dann abgebrochen wird, wenn

- ein Vortriebswunsch des Fahrers des Fahrzeugs erfaßt wird,
- das Fahrzeug sich bewegt und/oder
- die Drehzahl ($n_M$) des Fahrzeugmotors einen vorgebbaren Schwellwert unterschreitet.

Weiterhin kann bei Vorliegen der vorgebbaren Betriebsbedingungen die Fahrzeugbremse und/oder eine mechanischen Verriegelung des Getriebes aktiviert werden.

Weitere vorteilhafte Ausgestaltungen sind in Unteranspüchen zu entnehmen.

Zeichnung

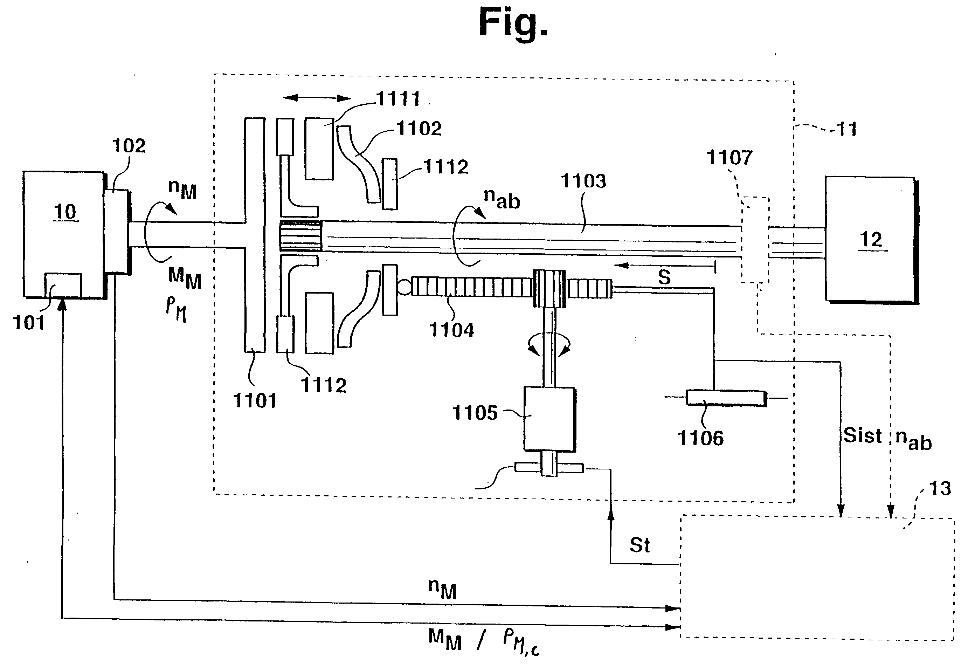

Die Figur 1 zeigt schematisch den Aufbau des erfindungsgemäßen Systems

Ausführungsbeispiel

Anhand der im folgenden beschriebenen Ausführungsbeispiele soll die Erfindung verdeutlicht werden.

Die Figur 1 zeigt mit dem Bezugszeichen 10 einen Fahrzeugmotor, dessen Ausgangswelle mit der Schwungscheibe 1101 der Servokupplung 11 verbunden ist. Abtriebsseitig führt die Servokupplung 11 zu dem Getriebe 12. Der Motor weist das Motormoment $M_M$ und die Motorleistung $P_M$ auf. Der Steuereinheit 13 wird die Motordrehzahl $n_M$ und das Motormoment $M_M$ zugeführt. Der Steuereinheit 13 wird unter anderem der durch den Wegsensor 1106 erfaßte aktuelle Einrückweg S zugeleitet. Dem Steuergerät 13 kann darüber hinaus noch die durch den Sensor 1107 erfaßte Abtriebsdrehzahl $n_{ab}$ der Kupplung zugeführt werden. Abhängig von diesen Eingangssignalen steuert die Steuereinheit 13 den Servomotor 1105 mittels des Signals St zur Verstellung der Kupplung an.

Das Motormoment $M_M$ kann dabei der Steuereinheit 13 von der Motorsteuereinheit 101 zugeführt werden, was aber bzgl. der vorliegenden Erfindung keine Rolle spielt. Wesentlicher für die Erfindung ist, daß die Steuereinheit 13 der Motorsteuereinheit 101 einen Befehl $P_{M,c}$ zur Konstanthaltung der Motorausgangsleistung zuführen kann.

Ein Drehzahlsensor 102 liefert die Motordrehzahl $n_M$, wobei dieses Signal im allgemeinen, ebenso wie das Motormoment $M_M$, im Motorsteuergerät 101 vorliegt und von dort der Steuereinheit 13 zugeführt werden kann.

Die Kupplung an sich ist in bekannter Weise mit einer Schwungscheibe 1101, einer Kupplungsscheibe 1110, einer Druckplatte 1111, einem Federelement (Tellerfeder) 1102 und dem Ausrücklager 1112 ausgestattet. Das Drehmoment, das von der Kupplung im schleifenden Betrieb übertragen wird, das Kupplungsmoment $M_{kup}$, ist unter anderem durch die Vorspannung der Tellerfeder 1102 gegeben. Die Vorspannung der Tellerfeder 1102 ist wiederum abhängig vom Einrückweg S des Kupplungsgestänges, das in diesem Ausführungsbeispiel als Zahnstange 1104 ausgebildet ist. Die Zahnstange 1104 wird durch die Ausgangswelle des Stellmotors 1105 betätigt. Im Normalbetrieb der Kupplung wird der Weg S, also der Einrückweg, über einen Regelkreis abhängig von einem Sollwert $S_{soll}$ angeregelt. Damit läßt sich über den Sollwert $S_{soll}$ das Kupplungsmoment steuern.

Während in der Figur 1 der Einrückweg S als Stellgröße der Servokupplung dargestellt ist, kann selbstverständlich auch der Drehwinkel des Stellmotors 1105 oder die Kraft auf die Tellerfeder 1102 als Stellgröße dienen. Bei einem zwischen Kupplung und Steller zwischengeschalteten Hydraulikkreis kann als Stellgröße der Druck im Hydrauliksystem verwendet werden. Die Größe S stellt daher ganz allgemein die Stellgröße für das Kupplungsmoment im schleifenden Zustand dar. In einem besonders einfachen System kann als Stellmotor beispielsweise ein Schrittmotor verwendet werden. Die Anzahl der Impulse, mit denen der Schrittmotor beaufschlagt wird, ist dann ein Maß für dessen relativen Drehwinkel. Auf diese Weise kann auf eine aufwendige Erfassung des aktuellen Einrückweges $S_{ist}$ durch das Wegpotentiometer 1106 verzichtet werden. Wird auf das Wegpotentiometer 1106 verzichtet, so wird muß allerdings bei jedem Ausrückvorgang (Schließen der Kupplung) die Zahnstange zur Kalibrierung bis zu einem bestimmten mechanischen Anschlag zurückgefahren werden.

Wesentlich für die vorliegende Erfindung ist, daß der Zusammenhang (Kennlinie) zwischen dem Einrückweg S und dem durch die Kupplung zu übertragenden Kupplungsmoment an die momentane Situation adaptiert wird. Im folgenden wird die Erfindung zunächst für einen Ottomotor beschrieben.

Bei der im folgenden zu beschreibenden Vorgehensweise wird am Motor 10 durch das Signal Signal $P_{M,c}$ eine konstante Leistung $P_M$ eingestellt und die Lastsituation konstant gehalten. Bei dieser Methode lassen sich kleine aber auch etwas größere Punkte der Kupplungskennlinie (Weg S gegen übertragenes Kupplungsmoment $M_{kup}$) finden.

Steht das Fahrzeugs still, das heißt ist die Fahrzeuglängsgeschwindigkeit im wesentlichen gleich Null, so wird die erfindungsgemäße Adaption durchgeführt. Die Fahrzeuglängsgeschwindigkeit kann durch Raddrehzahlsesnoren erfaßt werden. Das Getriebe ist dabei im allgemeinen in Neutralstellung. Die Leerlaufdrehzahl des Motors wird dabei im allgemeinen durch die Motorsteuereinheit auf einen bestimmten Wert (Leerlaufdrehzahl) geregelt.

In einem ersten Schritt wird (bei geöffneter Kupplung) ein Getriebegang (nicht der Neutralgang) eingelegt. In der Motorsteuereinheit 101 wird dann durch das Signal $P_{M,c}$ für kurze Zeit die Leerlaufdrehzahlregelung "eingefroren", d.h., daß die letzte Momentenforderung des Leerlaufreglers unverändert fortgeschrieben wird. Dieses kann insbesondere bei einer leicht erhöhten Leerlaufdrehzahl erfolgen. Die Drosselklappe wird dadurch auf einen festen Wert eingestellt und es werden keine Eingriffe an der Zündungeinstellung (konstanter Zündwinkel $\alpha_z$) und an der Einspritzung (konstante Einspritzmenge ti) vorgenommen.

Gleichzeitig wird dafür gesorgt, daß keine Änderungen an der momentanen Lastsituation des Motors 10 vorkommen. Hierzu müssen die durch den Motor angetriebenen Nebenaggregate (z.B. Lenksystem, Klimaanlage und/oder Stromgenerator) berücksichtigt werden.

Insbesondere wird der Klimakompressor kurzfristig ausgeschaltet, und wenn möglich, die Leistungsaufnahme des Stromgenerators konstantgehalten. Bei heutigen nicht direkt beeinflußbaren Lichtmaschinen könnte z.B. kurzfristig die Erregerspannung abgeschaltet werden. Das Fahrzeug wird dann dann kurzfristig aus der Batterie versorgt.

Ein eventuell vorhandener Lenkwinkelsensor könnte bei dem Erkennen von Änderungen des Lenkwinkels und der damit verbundenen Änderung der Motorlastsituation die erfindungsgemäße Adaption abbrechen. Andere Maßnahmen zum Erkennen von Laständerungen durch die Lenkhilfepumpe wie z.B. ein Erkennen von Druckänderungen im Hydrauliksystem sind denkbar. Stehen diese Maßnahmen zur Überwachung der Lenkhilfepumpe nicht zur Verfügung, muß eine indirekte Methode zum Erkennen von Laständerungen herangezogen werden. Eine solche Methode könnte z. B. dadurch gegeben sein, daß die Messung nicht mit den Aktionen an der Kupplung korreliert ist, oder der neue Adaptionswert stark von den zuvor erkannten Werten abweicht.

Unter diesen konstanten Lastbedingungen stellt sich im Motor 10 eine stationäre Motordrehzahl $n_M$ ein, bei der das durch den Verbrennungsvorgang erzeugte (ohne Berücksichtigung von sonstigen Verlusten) Motormoment, das sogenannte indizierte Motormoment $M_{M,ind}$, gleich der Summe der Verlustmomente $M_{verl}$ und Reibmomente $M_{reib}$ im Motor 10 ist.

Weiterhin muß die Luft-/Kraftstoffgemisch-Zusammensetzung $\lambda$ konstant gehalten werden. Hierzu ist im allgemeinen eine entsprechende $\lambda$-Regelung vorgesehen.

Ausgenutzt wird jetzt die Tatsache, daß bei einer festgehaltenen Drosselklappen mit einem kleinen Öffnungsquerschnitt (bei $\lambda$=konstant) ein Ottomotor eine konstante Leistung $P_M$ bei einer bestimmten stationären Drehzahl $n_{M1}$ abgibt. Wird jetzt durch Schließen der Kupplung bei eingelegtem Getriebgang ein kleines Moment vom Motor abgenommen, so sinkt die Motordrehzahl $n_M$ um einen bestimmten Wert. Da die Leistung konstant bleibt, steigt das vom Motor 10 indizierte Moment $M_{M,ind}$. Es stellt sich eine neue stationäre Drehzahl $n_{M2}$ ein, die wieder dem oben erwähnten Momentengleichgewicht entspricht. Unter Berücksichtigung der zu dieser neuen Drehzahl $n_{M2}$ gehörenden Verlustmomente (z.B. als Kennlinie/Kennfeld abgespeichert) läßt sich das an der Kupplung abgenommene Kupplungsmoment $M_{kup}$ bestimmen und zu dem momentan eingestellten Kupplungsweg S in Beziehung setzen. Durch eine Variation des Kupplungsmoments bzw. Des Kupplungsweges S läßt sich ein großer Bereich der Kupplungskennlinie (Kupplungsweg in Abhängigkeit des übertragbaren Kupplungsmoments) ausmessen.

Dem oben beschriebenem Verfahren liegen die folgende Überlegungen und Gleichungen zugrunde:

1. Bei einem kleinen Öffnungswinkel $\alpha_{Dk}$ der Drosselklappe liegt im allgemeinen eine überkritische Strömung durch den Öffnungsquerschnitt der Drosselklappe vor; die Strömungsgeschwindigkeit am Spalt der Drosselklappe ist also in der Größenordung der Schallgeschwindigkeit. Bei einer solchen überkritischen Strömung durch einen festen Öffnungsquerschnitt der Drosselklappe ist der Luftmassenstrom konstant und unabhängig von kleinen Änderungen des Unterdrucks im Saugrohr und unabhängig von der Motordrehzahl. Bei einer konstanten Luft/Kraftstoffgemisch-Zusammensetzung $\lambda$ (insbesondere $\lambda$=1) bedeutet der konstante Luftmassenstrom eine konstante Motorausgangsleistung $P_M$.

2. Beim Erreichen einer stationären Motordrehzahl gilt das folgende Momentengleichgewicht:

$$M_{M,ind} = M_{reib} + M_{verl} + M_{kup}$$

$M_{M,ind}$ bezeichnet dabei das schon beschrieben indizierte Motormoment, $M_{reib}$ die Motoreibungsverluste, $M_{verl}$ die sonstigen Momentenverluste und $M_{kup}$ das gesuchte Kupplungsmoment.

3. Das Reibmoment $M_{reib}$ und das Verlustmoment $M_{verl}$ (z.B. verursacht durch die Öl- und/oder Wasserpumpe) ist jeweils eine Funktion der Motordrehzahl $n_M$ und der Motortemperatur und kann in einem Kennfeld mit guter Genauigkeit abgelegt werden.

Das erfindungsgemäße Schließen der Kupplung kann dabei stetig mit einer vorgegebener Geschwindigkeit erfolgen, wobei die Geschwindigkeit derart vorgegeben sein muß, daß sich quasi-stationär die entsprechende auszuwertende Motordrehzahl einstellt. Die Ansteuerung der Kupplung kann aber auch schrittweise erfolgen, wobei nach jedem Schritt die sich stationär einstellende Motordrehzahl zur Bestimnmung des Kupplungsmoments ausgewertet wird.

Im Falle eines Dieselmotors wird die konstante Motorleistung durch eine konstante einzuspritzende Kraftstoffmenge pro Zeiteinheit erzielt.

Um eine Adaption bis hin zu höheren Kupplungsmomenten ohne eine Fortbewegung des Fahrzeugs zu ermöglichen, kann vorgesehen sein, daß während des erfindungsgemäßen Schließens der Kupplung die Fahrzeugbremse und/oder eine eventuelle vorhandene mechanische Arretierung des Getriebes betätigt wird.

Die erfindungsgemäße Adaption wird sofort abgebrochen, wenn

- ein Vortriebswunsch des Fahrers des Fahrzeugs erfaßt wird (Fahrer drückt das Fahrpedal nieder),
- das Fahrzeug sich bewegt (Erfassung durch Raddrehzahsensoren) oder
- die Drehzahl $n_M$ des Fahrzeugmotors einen vorgebbaren Schwellwert unterschreitet (Schutz vor "Abwürgen" des Motors).

Mit der erfindungsgemäßen Vorgehnsweise lassen sich die Kupplungsmomente $M_{kup}$ im unteren Momentenbereich mit großer Genauigkeit bestimmen. Damit liegen in diesem Bereich gute Adaptionswerte für die Kupplungskennlinie vor, die für alle Aufgaben einer automatisierten Kupplung genutzt werden können und den Komfort eines elektronischen Kupplungsmanagemet verbessern.

## Patentansprüche

1. System zur Steuerung einer im Antriebsstrang eines Kraftfahrzeug angeordneten Servokupplung (11), wobei der Antriebsstrang weiterhin einen eine einstellbare Ausgangsleistung ($P_M$) aufweisenden Fahrzeugmotor (10) und ein wenigstens eine einlegbare Gangstufe aufweisendes Getriebe (12) aufweist, und wobei bei der Servokupplung das Öffnen und Schließen der Kupplung mittels eines Ein- und Ausrückens (S) eines von einer Steuereinheit (13) gesteuerten Stellgliedes (1105) geschieht, die Ausgangsleistung ($P_M$) des Fahrzeugmotor durch Betriebsparameter ($t_i$, $\alpha_z$, $\alpha_{Dk}$) des Fahrzeugmotors eingestellt wird und bei Vorliegen vorgebbarer Betriebsbedingungen, bei denen das Fahrzeug im wesentlichen die Fahrzeuggeschwindigkeit Null aufweist, zur Adaption der Servokupplung eine willkürliche Ansteuerung des Stellgliedes (1105) getätigt wird und eine sich von der Neutralstellung des Getriebes unterscheidende vorgegebene Gangstufe eingelegt wird,
dadurch gekennzeichnet, dass
bei Vorliegen der vorgebbaren Betriebsbedingungen die Betriebsparameter des Fahrzeugmotors derart eingestellt werden, dass die Ausgangsleistung ($P_M$) des Fahrzeugmotors im wesentlichen konstant ist.

2. System nach Anspruch 1, dadurch gekennzeichnet, dass als Fahrzeugmotor eines Brennkraftmaschine vorgesehen ist und als Betriebsparameter der Drosselklappenöffnungswinkel ($\alpha_{Dk}$), die Zündungseinstellung ($\alpha_z$), die dem Fahrzeugmotor zugeführte Kraftstoffmenge ($t_i$) und/oder die Regelung der Kraftstoff/Luft-Gemischzusammensetzung ($\lambda$-Regelung) eingestellt werden, wobei insbesondere vorgesehen ist, dass bei Vorliegen der vorgebbaren Betriebsbedingungen die Betriebsparameter des Fahrzeugmotors im wesentlichen konstant gehalten werden.

3. System nach Anspruch 1, dadurch gekennzeichnet, dass bei Vorliegen der vorgebbaren Betriebsbedingungen das von der Steuereinheit (13) gesteuerte Stellglied (1105) derart beaufschlagt wird, dass die Servokupplung in vorgebbarer Weise ausgerückt/geschlossen wird, wobei insbesondere vorgesehen ist, dass das Ausrücken (S) stetig mit einer vorgegebener Geschwindigkeit getätigt wird oder bei vorgebbaren Werten unterbrochen wird.

4. System nach Anspruch 1, dadurch gekennzeichnet, dass während des Ausrückens und/oder nach dem Ausrücken der Servokupplung die momentane Drehzahl ($n_M$) des Fahrzeugmotors erfaßt wird und abhängig von der erfaßten Drehzahl ($n_M$) das momentan von der Servokupplung übertragene Kupplungsmoment ($M_{kup}$) bestimmt wird.

5. System nach Anspruch 3, dadurch gekennzeichnet, dass der Fahrzeugmotor Nebenaggregate wie ein Lenksystem, eine Klimaanlage und/oder einen Stromgenerator antreibt und während des Ausrückens der Servokupplung die Nebenaggregate derart angesteuert werden, dass die Nebenaggregate von dem Fahrzeugmotor durch ein definiertes Moment angetrieben werden, wobei insbesondere eine Abschaltung wenigstens einzelner Nebenaggregate vorgesehen ist.

6. System nach Anspruch 4, dadurch gekennzeichnet, dass das bestimmte Kupplungsmoment ($M_{kup}$) zur Adaption der Servokupplung herangezogen wird.

7. System nach Anspruch 1, dadurch gekennzeichnet, dass die willkürliche Ansteuerung des Stellgliedes (1105) dann abgebrochen wird, wenn

   - ein Vortriebswunsch des Fahrers des Fahrzeugs erfaßt wird,
   - das Fahrzeug sich bewegt und/oder
   - die Drehzahl ($n_M$) des Fahrzeugmotors einen vorgebbaren Schwellwert unterschreitet.

8. System nach Anspruch 1, dadurch gekennzeichnet, dass bei Vorliegen der vorgebbaren Betriebsbedingungen die Fahrzeugbremse und/oder eine mechanischen Verriegelung des Getriebes aktiviert wird.

## Claims

1. System for controlling a servo clutch (11) arranged in the drive train of a motor vehicle, the drive train further having a vehicle engine (10) which has an adjustable output power ($P_M$), and a gearbox (12) having at least one selectable gear step, and in the servo clutch the clutch being opened and closed by means of engaging and disengaging (S) an actuator (1105) controlled by a control unit (13), the output power ($P_M$) of the vehicle engine being adjusted by operating parameters ($t_i$, $\alpha_z$, $\alpha_{Dk}$) of the vehicle engine, and in the presence of prescribable operating conditions for which the vehicle speed is essentially zero, the actuator (1105) being driven arbitrarily in order to adapt the servo clutch, and a prescribed gear step differing from the neutral position of the transmission being selected, characterized in that in the presence of the prescribable operating conditions the operating parameters of the vehicle engine are adjusted in such a way that the output power ($P_M$) of the vehicle engine is essentially constant.

2. System according to Claim 1, characterized in that an internal combustion engine is provided as vehicle engine, and the throttle opening angle ($\alpha_{Dk}$), the spark setting ($\alpha_z$), the fuel quantity ($t_i$) fed to the vehicle engine, and/or the control of the fuel/air mixture composition ($\lambda$, control) are adjusted as operating parameters, it being provided, in particular, that the operating parameters of the vehicle engine are held essentially constant in the presence of the prescribable operating conditions.

3. System according to Claim 1, characterized in that in the presence of the prescribable operating conditions the actuator (1105) controlled by the control unit (13) is actuated in such a way that the servo clutch is disengaged /closed in a prescribable way, it being provided, in particular, that the disengagement (S) is always actuated at a prescribed speed or is interrupted at prescribable values.

4. System according to Claim 1, characterized in that during the release and/or after the release of the servo clutch the instantaneous speed ($n_M$) of the vehicle engine is detected, and the coupling torque ($M_{kup}$) instantaneously transmitted by the servo clutch is determined as a function of the detected speed ($n_M$).

5. System according to Claim 3, characterized in that the vehicle engine drives accessories such as a steering system, an air conditioner and/or a current generator, and the accessories are driven during the release of the servo clutch in such a way that the vehicle engine drives the accessories by a defined torque, it being provided, in particular, that at least individual accessories are switched off.

6. System according to Claim 4, characterized in that the specific coupling torque ($M_{kup}$) is used to adapt the servo clutch.

7. System according to Claim 1, characterized in that the arbitrary driving of the actuator (1105) is discontinued when

   - a traction request from the driver of the vehicle is detected,
   - the vehicle is moving, and/or
   - the speed ($n_M$) of the vehicle engine drops below a prescribable threshold value.

8. System according to Claim 1, characterized in that in the presence of the prescribable operating conditions the vehicle brake and/or a mechanical transmission lock is activated.

## Revendications

1. Système de commande d'un servo-embrayage (11) disposé sur la ligne de transmission d'un véhicule automobile, dans lequel la ligne de transmission présente en outre un moteur de véhicule (10) présentant une puissance de sortie réglable ($P_M$) et une boîte de vitesse (12) présentant au moins une vitesse enclenchable, et dans lequel en ce qui concerne le servo-embrayage l'ouverture et la fermeture de l'embrayage a lieu au moyen de l'enclenchement et du désenclenchement (S) d'un organe de réglage (1105), commandé par une unité de commande (13), la puissance de sortie ($P_M$) du moteur du véhicule étant réglée par des paramètres de fonctionnement ($t_i$, $\alpha_z$, $\alpha_{Dk}$) du moteur du véhicule, et quand sont réunies des conditions de fonctionnement qui peuvent être définies au préalable, conditions pour lesquelles le véhicule présente une vitesse sensiblement égale à zéro, on actionne une commande volontaire de l'organe de réglage (1105) et on enclenche une vitesse prédéfinie autre que ce qui correspond à la position neutre de la boîte de vitesse,
caractérisé en ce que
quand sont réunies les conditions de fonctionnement qui peuvent être définies au préalable, les paramètres de fonctionnement du moteur du véhicule sont réglés d'une manière telle que la puissance de sortie ($P_M$) du moteur du véhicule est sensiblement constante.

2. Système selon la revendication 1,
caractérisé en ce que
il est prévu comme moteur du véhicule un moteur à combustion interne et comme paramètre de fonctionnement on règle l'angle d'ouverture du clapet d'étranglement ($\alpha_{Dk}$), le réglage de l'allumage ($\alpha_z$), la quantité de carburant amenée au moteur du véhicule ($t_i$) et/ou la régulation de la composition du mélange d'air et de carburant (régulation $\lambda$), et il est en particulier prévu que, quand les conditions de fonctionnement qui peuvent être définies au préalable sont réunies, les paramètres de fonctionnement du moteur du véhicule sont maintenus sensiblement constants.

3. Système selon la revendication 1,
caractérisé en ce que,
quand les conditions de fonctionnement qui peuvent être définies au préalable sont réunies, l'organe de réglage (1105), commandé par l'unité de commande (13), est sollicité d'une manière telle que le servo-embrayage est désenclenché/fermé d'une manière qui peut être définie au préalable, en prévoyant en particulier que le désenclenchement (S) est actionné constamment avec une vitesse prédéfinie ou est interrompu pour des valeurs qui peuvent être définies au préalable.

4. Système selon la revendication 1,
caractérisé en ce que
pendant le désenclenchement et/ou après le désenclenchement du servo-embrayage on détecte la vitesse de rotation momentanée ($n_M$) du moteur du véhicule, et on détermine en fonction de la vitesse de rotation détectée ($n_M$) le couple d'embrayage ($M_{kup}$) momentanément transmis par le servo-embrayage.

5. Système selon la revendication 3,
caractérisé en ce que

- le moteur du véhicule entraîne des sous-ensembles auxiliaires tels qu'un système de direction assistée, une installation de climatisation, et/ou une génératrice de courant, et
- pendant le désenclenchement du servo-embrayage les sous-ensembles auxiliaires sont entraînés par un couple défini du moteur du véhicule, en prévoyant en particulier un débranchement d'au moins certains des sous-ensembles auxiliaires.

6. Système selon la revendication 4,
caractérisé en ce que
le couple déterminé d'embrayage ($M_{kup}$) est utilisé pour l'adaptation du servo-embrayage.

7. Système selon la revendication 1,
caractérisé en ce que
la commande volontaire de l'organe de réglage (1105) est alors coupée, si

- on détecte un souhait du conducteur de faire avancer le véhicule,
- le véhicule se déplace et/ou
- la vitesse de rotation ($n_M$) du moteur du véhicule tombe en dessous d'une valeur de seuil qui peut être définie au préalable.

8. Système selon la revendication 1,
caractérisé en ce que
quand sont réunies les conditions de fonctionnement qui peuvent être définies au préalable, on actionne le frein du véhicule et/ou un verrouillage mécanique de la boîte de vitesse.

# Fig.

EP 0 906 199 B1